# EUROPEAN PATENT APPLICATION

(11) **EP 1 521 434 A1**
(43) Date of publication of application: **06.04.2005**
(21) Application number: 03021717.8
(22) Date of filing: 25.09.2003
(51) Int. Cl.: H04M 1/725

(54) **Multimedia communication device**

(71) Applicant: Sony Ericsson Mobile Communications AB, 221 88 Lund (SE)
(72) Inventor: Risberg, Nils, 238 31 Oxie (SE); Malthe, Anders, 237 33 Bjärred (SE)
(74) Representative: Dahnér, Christer

(57) **Abstract**

The present invention is directed towards a portable electronic device comprising:
- a user input/output unit (102) for interaction with a user, said input/output unit (102) comprising:
   - at least one tactile sensor/generator (104) for sensing/generating tactile impressions to or from a user, and
   - a front face (103) covering said at least one sensor/generator (104);
   - a processing unit (112) communicatively coupled to said input/output unit (102) and a transceiver unit (116) for transmitting impressions to/from the device (100) for multimedia transmission, wherein said processing unit (112) is arranged to provide transmission of tactile user impressions, so that tactile impressions can be transmitted between user thereof.

## Description

### TECHNICAL FIELD OF THE INVENTION

The present invention relates to multimedia communication between users of portable electronic devices. More particularly it relates to a device for multimedia transmission in a portable electronic device, and a portable electronic device comprising the same.

### DESCRIPTION OF RELATED ART

There is an increasing number of mobile communication network operators that support multimedia services not limited to voice only. Examples of such multimedia services are: picture messaging, including still pictures as well as in some cases even video sequences, and in the future possibly streaming of video and "truly" video messaging. The use of third generation mobile communication networks, so-called 3-G networks opens up for improved multimedia communication between users thereof.
Nevertheless, for multimedia communication, at present transmittable media are limited to audio and video, thus, impressions cannot be transmitted in other media than the two latter.

However, a user may want even closer contact with another user than what is possible with speech and perhaps at the best also an accompanying video sequence, which of course limits the use even of today's multimedia communication, lacking applications/functions for closer human contacts than video and voice. The present solution to this problem is that a user has to physically meet the other user to be able to share feelings, for instance shake hands or touch the other person. This of course can often be cumbersome because of distance, timing problems etc, whereby such a contact may not be possible at all.

There is thus a need for providing a portable electronic device, in which at least some of the disadvantages with unsatisfactory closer human contact can be circumvented, i. e. to improve transmission also of impressions other than sound and video.

### SUMMARY OF INVENTION

The invention is thus directed towards solving the problem of providing a portable electronic device capable of transmitting also impressions other than sound and video so that transmission of impressions is improved.

This is achieved by providing transmission of tactile sensation, as well as sound and video.

One object of the present invention is thus to provide a portable electronic device capable of transmitting also tactile sensations from or to a user thereof.

According to one aspect of this invention, this object is achieved by a device for multimedia transmission provided for a portable electronic device comprising:
- a user input/output unit for interaction with a user, said input/output unit comprising:
- at least one tactile sensor/generator for sensing/generating tactile impressions to or from a user, and
- a front face covering said at least one sensor/generator;
- a processing unit communicatively coupled to said input/output unit and a transceiver unit for transmitting impressions to/from the device for multimedia transmission, wherein said processing unit is arranged to provide transmission of tactile user impressions.

According to this aspect, multimedia communication is preferably so-called "duplex-communication", whereby communication can be in two directions, typically in real time, between two users.

This aspect of the present invention has the advantage that multimedia communication between people can be based on other senses than just sight and hearing, so that closer human contacts can be provided.

A second aspect of the present invention is directed towards a device including the features of the first aspect,wherein said device comprises a plurality of sensors, of which one sensor can be temperature sensistive.

A third aspect of the present invention is directed towards a device including the features of the second aspect, in which the sensors/generators are arranged in a matrix.

This third aspect brings the advantage that a movement can be transmitted.

A fourth aspect of the present invention is directed towards a device including the features of the first aspect, further comprising a plurality of tactile sensors/generators, preferably four, arranged in a xylofon-like structure, arranged to receive a user's finger.

A fifth aspect of the present invention is directed towards a device including the features of the fourth aspect, in which the each sensors/generator includes two tactile actuating elements.

A sixth aspect of the present invention is directed towards a device for multimedia transmission, including the features of the first to the fifth aspect, wherein said processing unit is arranged to provide real time transmission of movement during a call.

This aspect of the present invention has the advantage that a new dimension will be added to the communication bewteen people via portable electronic device such as mobile phones.

A seventh aspect of the present invention is directed towards a device for multimedia transmission, including the features of the first to the sixth aspect wherein said processing unit is connected to a store comprising an operating system (OS), an impression analysis engine, and a response analysis engine for transforming the tactile impressions into data.

An eighth aspect of the present invention is directed towards a device for multimedia transmission, including the features of the first to the seventh aspect in which the sensors are arranged to scan continously.

A ninth aspect of the present invention is directed towards a device for multimedia transmission, including the features of the first to the eight aspect the tactile sensation generators include actuators, motors (for instance linear motors), and/or solenoids.

A tenth aspect the present invention is directed towards a portable electronic device, comprising a device for multimedia transmission provided for a portable electronic device comprising:
- a user input/output unit for interaction with a user, said input/output unit comprising:
- at least one tactile sensor/generator for sensing/generating tactile impressions to or from a user, and
- a front face covering said at least one sensor/generator;
- a processing unit communicatively coupled to said input/output unit and a transceiver unit for transmitting impressions to/from the device for multimedia transmission, wherein said processing unit is arranged to provide transmission of tactile user impressions.

An eleventh aspect of the present invention is directed towards a portable electronic device including the features of the tenth aspect, where said portable electronic device is a phone.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
Fig. 1 shows a plan view of a portable electronic device according to an embodiment of the invention,
Fig. 2 shows a block diagram illustrating an input/output unit provided with sensors, and being connected to a processing unit and a corresponding store,
Fig. 3a and 3b show a first and a second user using an embodiment of the device, respectively,
Fig. 4a is a schematic plan view illustrating a preferred embodiment of the invention,
Fig. 4b illustrates the same embodiment in a cross-sectional view from the side, and
Fig. 5 is a block diagram illustrating memory content of a store.

### DETAILED DESCRIPTION OF THE EMBODIMENTS

The present invention relates to provision of transmitting tactile impressions for a portable electronic device. In the following, the portable electronic device will be described in relation to a mobile phone, however it should be realised that it can be any one of a variety of devices like a personal digital assistant (PDA), a cordless phone, etc.

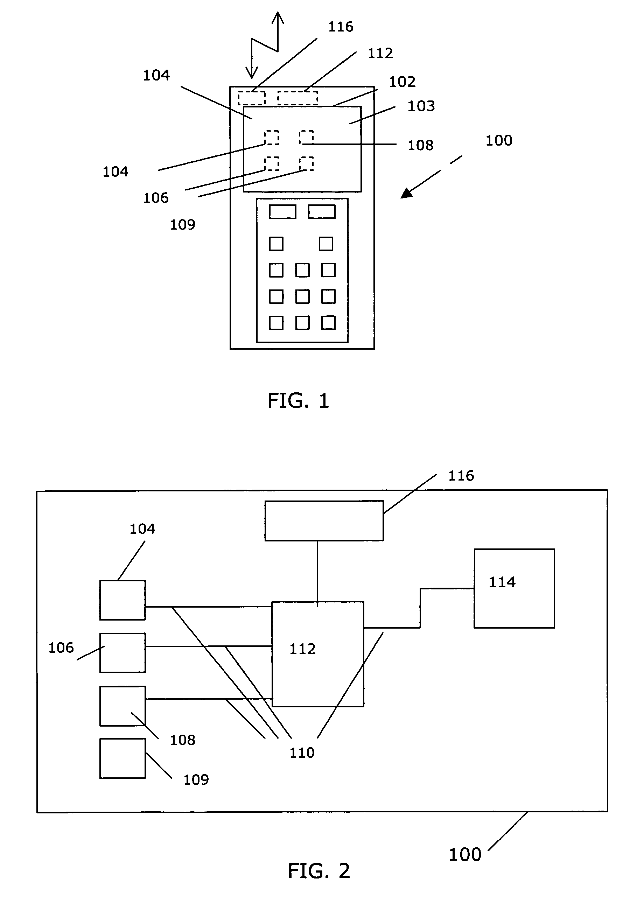

Reference will now be given to Fig. 1 and 2 showing a device for transmitting impressions 100 provided for a portable electronic device, according to one preferred embodiment of the invention. In this figure the device for transmitting impressions 100, includes a mobile phone provided for communication with other mobile phones (not shown) by means of an intervening communication network (not shown) in a way known per se (indicated by a double-headed arrow). The device 100 for transmitting impressions comprises a user input/output unit 102 provided with a front face 103 for interaction with a user (not shown), covering a first tactile sensor/generator 104, a second tactile sensor/generator 106, and a third tactile sensor/generator 108 for interaction with a user, wherein the sensors/generators 104, 106, 108 are communicatively coupled, by means of a systems bus 110 or the like, to a processing unit ("CPU") 112, for instance a microprocessor. The sensors/generator may even if described as a single unit be distributed/separated into a sensor, and generator, respectively, i. e. as two separate units. The sensors/generators may also be provided in one or more matrices.

The CPU 112 is further connected, typically by means of the system bus 110, to a store 114 such as a memory comprising program instructions for running the CPU 112. In another embodiment, the system bus 110, the CPU 112 and the store 114 may be fully integrated into the device 100 for transmitting impressions so that both the mobile phone and the device 100 for transmitting impressions share CPU and memory for all processing and data storage, respectively. The person skilled in the art will also recognize that alternatively, the store, although illustrated as one unit, can also be one or more distributed units.

The CPU 112 executes instructions stored in the store 114 for receiving and "decoding" a signal from a sensor 104, 106, 108, or to provide a signal to a generator, 104, 106, 108, i. e. in the first case sensing a tactile impression such as applied user finger pressure and decode into a suitable format for further transmission to another user, or in the latter case generating an impression such as generating pressure on a user's finger tip so that he/she can feel a pressure impression communicated from another user, applying an impression such as finger pressure on a corresponding input/output unit in his/her mobile phone. This will be described in more detail below in conjunction with an example.

The device 100 further comprises, or is connected to, a transceiver unit 116 for transmitting the tactile impressions on a radio link in a way known per se, provided that the intervening network supports the transmission of the impression. A typical non-limiting example of such a network is a 3-G mobile communication network.

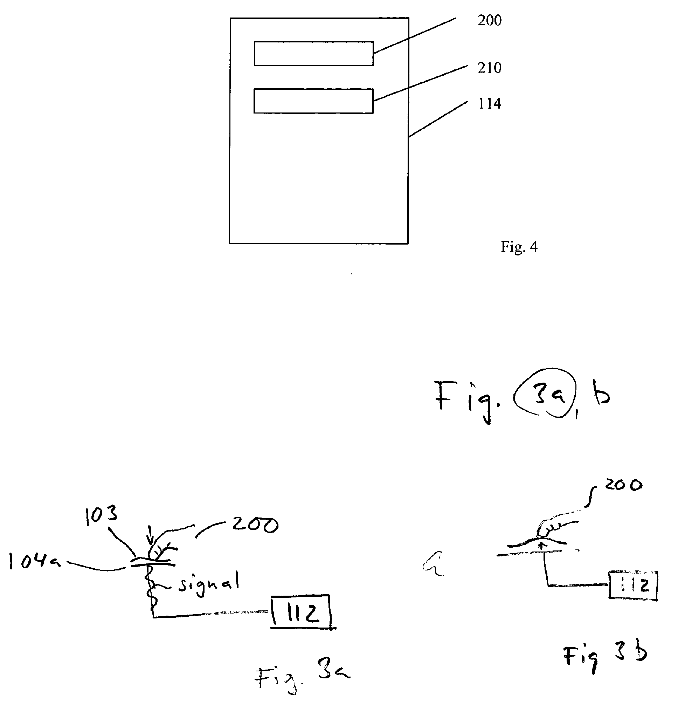

Now is referred to Fig. 3a and 3b illustrating a typical example situation of the application of the invention.

Fig. 3a illustrates a first user 200 using an embodiment of the device 100 when located in a mobile phone. The first user's 200 finger tip presses on a front face 103 that comprises a flexible pressure sensitive "skin". This pressure is preferably applied with one or more of the user's fingers, but alternatively, other objects can be used to apply pressure. Under the pressure sensitive skin there are located a sensor 104 comprising a force-sensitive sensor pad 104a that provides an analog output signal *signal* responsive to the magnitude of the applied force and that can detect even a small amount of pressure. The signal are preferably input to a computer system, typically comprising the processing unit and the store. In this embodiment, the CPU 112, is coupled to the force-sensitive sensor pad 104a and provides a signal in response to the application of pressure to the pad. In this figure, the front face 103 is flexible and deforms under pressure from the first user 200, but also more rigid front faces could be employed. Once the user 200 stops applying pressure to the sensors, no signal will be provided as input to the CPU.

The sensor typically includes an A/D converter that converts analog signals from the force sensitive pad into digital signals to be treated by the processing unit. The digital signals are then typically after integration of a difference of signals from top and bottom force-sensitive pads to provide a position signal that can be converted into data that can be used for control signals for servo-like control of the tactile generators in another user's device. This conversion will not be further described in more detail since it can be done in a way known per se. Typically, the A/D converter is of a type that integrates multi-bit values, that provides a response related to the magnitude of the force applied to the corresponding force-sensitive pads.

Fig. 3 b illustrates a second user 220 that will feel the corresponding movement in his/her receiving device 100, simultaneously. The device 100 provides real time transmission of movement (in this case applied pressure) during a call.

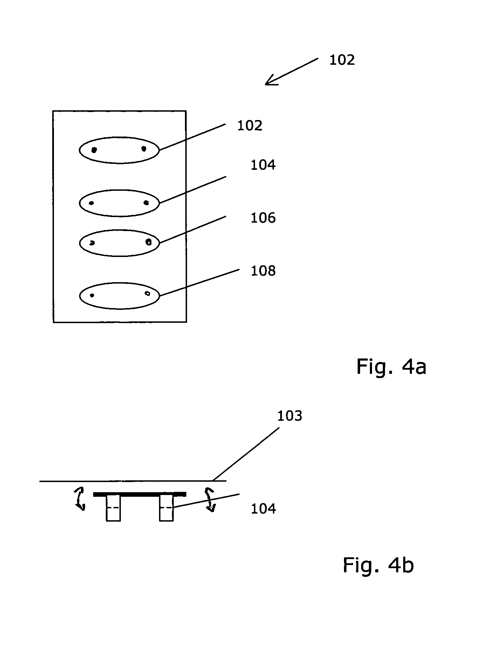

Fig. 4a illustrates an input/output unit 102 of a device for mulutimedia transmission according to a preferred embodiment of the invention, which input/output unit comprises a pressure sensitive skin comprising four pressure sensitive sensors/actuators 104, 106, 108, 109 arranged in a matrix of xylofon-like structure, for receving a corresponding number of a user's fingers, typically all fingers of a hand except the thumb. The sensors/actuators 104, 106, 108, 109 are pivotable around an pivoting axis and each includes two actuating elements arranged around the pivoting axis. In this way a user is able to apply and feel pressure in real time during a call with another user having a similar device. Of course other matrix types may be provided without departing from the invention, even if not disclosed in more detail herein.

On top of the pressure sentive film there is provided a front face 103, herein in the form of a skin that is flexible so that impressions, except for pressure, typically also including heat can be transmitted to/from a user thereof. Heat can be sensed in any suitable way, for instance by means of using conventional heat sensitive circuitry. Also generation of heat can be provided with present technology for instance by means of heating/cooling devices used in portable heating/cooling devices such as refridgerators. In such a case it might be necessary to be connected to some power source outside the portable communication device because of large power consumption. However, the invention is not limited to such an external power source.

The input/output unit 102 as illustrated in the cross-sectional view in Fig. 4b shows the cross-section of one sensor/actuator 104 and how it operates (indicated with two double-headed arrows).

Fig. 5 is a block diagram illustrating content of store, which typically includes an operating system known per se, an impression analysis engine 200, and a response analysis engine 210. The impression analysis engine 200 determines an impression from a user and transforms this into data for the transceiver for transmission, which will be discussed in more detail in conjunction with an example below. The response analysis engine 210 translates data from the transceiver to operate the generator for generation of a corresponding impression. Also this will be further described below.

It will be appreciated that, although the structure of the memory is described as a table, other data base structure can be used. Table is for a single sensor and includes a set of functions. While table only comprises a set of two functions, any number of functions and corresponding analysis of impressions may be stored in table.

Note that the input unit 102 must have at least one sensor, preferably four for receiving a user's fingers, with no maximum number of sensors. Sensors 104, 106, 108 read finger features such as heat flux, applied pressure, and optionally movement. The sensors may be arranged to continuously scan for finger features or may be activated when a user touches one of the sensors.

The generator can be implemented as a variety of devices; for example, generator (actuator) can be a vibrating diafragm or similar device for transmitting a vibratory tactile sensation to the user. Motors, solenoids, or other types of tactile sensation generators can also be used.

It is emphasized that this invention can be varied in many ways, of which the alternative embodiments below only are examples of a few. For example, the invention has been described as a part of a portable communication device, in particular a mobile phone, however, the invention can also be implemented as accessory part, whereby design and size may vary depending on use. An accessory implementation linked (by means of wire or Bluetooth™) to the mobile phone can have a larger input/output area to allow an extended touch and feel experience. It is also possible to provide this area in a plurality of smaller such areas at any suitable location, such as on the rear side of the phone. These different embodiments are hence non-limiting examples. The scope of this present invention, however, is only limited by the subsequently following claims.

With the present invention has thus been described a portable electronic device having the following advantages:

Real time transmission of movement during a call, which will add a new dimension to the communication between people via mobile phones. With the invention a user cannot only hear and see his/her beloved ones, but also hold their hands in real time.

## Claims

1. Device for multimedia transmission provided for a portable electronic device comprising:
- a user input/output unit (102) for interaction with a user, said input/output unit (102) comprising:
- at least one tactile sensor/generator (104) for sensing/generating tactile impressions to or from a user, and
- a front face (103) covering said at least one sensor/generator (104);
- a processing unit (112) communicatively coupled to said input/output unit (102) and a transceiver unit (116) for transmitting impressions to/from the device (100) for multimedia transmission, wherein said processing unit (112) is arranged to provide transmission of tactile user impressions.

2. Device for multimedia transmission according to claim 1, comprising a plurality of tactile sensors/generators (104, 106, 108, 109).

3. Device for multimedia transmission according to claim 2, in which the sensors/generators (104, 106, 108, 109) are arranged in a matrix.

4. Device for multimedia transmission according to claim 3, comprising a plurality of sensors/generators (104, 106, 108, 109), preferably four, arranged in a xylofon-like structure, arranged to receive a user's finger.

5. Device for multimedia transmission according to claim 4, wherein each sensor/generator (104, 106, 108, 109) includes two actuating elements.

6. Device for multimedia transmission according to claim 1, in which at least one sensor is temperature sensitive.

7. Device for multimedia transmission, according to any one of the claims 2-6, wherein said processing unit (112) is arranged to provide real time transmission of movement during a call.

8. Device for multimedia transmission, according to any one of claims 2-7, wherein said processing unit is connected to a store (114) comprising an operating system (OS), an impression analysis engine (200), and a response analysis engine (210) for transforming the tactile impressions into data.

9. Device for multimedia transmission, according to any one of the claims 2-8, in which the sensors are arranged to scan continuously.

10. Device for multimedia transmission, according to any one of the claims 2-9, in which the tactile sensation generators include actuators, motors, and/or solenoids.

11. Device for multimedia transmission, according to any one of the claims 2-10, in which the cover (103) is a thin layer of polymeric material, providing a skin.

12. Portable electronic device, comprising a device for multimedia transmission provided for a portable electronic device comprising:
- a user input/output unit (102) for interaction with a user, said input/output unit (102) comprising:
- at least one tactile sensor/generator (104) for sensing/generating tactile impressions to or from a user, and
- a front face (103) covering said at least one sensor/generator (104);
- a processing unit (112) communicatively coupled to said input/output unit (102) and a transceiver unit (116) for transmitting impressions to/from the device (100) for multimedia transmission, wherein said processing unit (112) is arranged to provide transmission of tactile user impressions.

13. Portable electronic device, according to claim 12, wherein said portable electronic device (100) is a mobile phone.
